**Europäisches Patentamt**

**European Patent Office**

**Office européen des brevets**

(19)

(11) Numéro de publication: **0 036 828**
**A1**

# (12) DEMANDE DE BREVET EUROPEEN

(21) Numéro de dépôt: **81420027.5**

(51) Int. Cl.³: **A 45 C 13/10**, A 45 D 33/22

(22) Date de dépôt: **03.03.81**

(30) Priorité: **10.03.80 FR 8005288**

(71) Demandeur: **TUBOPLAST-FRANCE, 36 rue de Laborde, F-75008 Paris (FR)**

(43) Date de publication de la demande: **30.09.81**
**Bulletin 81/39**

(72) Inventeur: **Bonnet, Philippe, 80, rue d'Assas, F-75006 Paris (FR)**
Inventeur: **Duranton, Lucien, 34, rue du Capitaine Mauduit, F-56600 Lanester (FR)**

(74) Mandataire: **Michon du Marais, Loys et al, PECHINEY UGINE KUHLMANN 28, rue de Bonnel, F-69433 Lyon Cédex 3 (FR)**

(84) Etats contractants désignés: **DE GB IT**

(54) **Boîtier, notamment pour produits cosmétiques et son fermoir.**

(57) L'invention concerne un boîtier en matière plastique, constitué par un fond (2) et un couvercle (1) articulés entre eux (en 3) et comportant un fermoir constitué d'un ergot (4) solidaire du couvercle et d'un ergot (5) solidaire du fond susceptible d'être encliqueté élastiquement au-dessus de l'ergot (4). Selon l'invention, l'ergot (5) est en une seule pièce avec une lame élastique (7) constituée par une portion amincie de paroi latérale (2a) du fond (2) provenant d'une division dans le sens de l'épaisseur de ladite paroi venue directement de moulage, ladite portion étant séparée de l'autre partie (8) de la paroi par un espace permettant sa flexion vers l'intérieur du boîtier, ladite partie (8) formant butée de limitation de la déformation de ladite lame.

Application au conditionnement des produits cosmétiques.

BOITIER NOTAMMENT POUR PRODUITS COSMETIQUES ET SON FERMOIR

Les boîtiers destinés au conditionnement des produits cosmétiques sont généralement réalisés en matière plastique et doivent présenter certaines qualités esthétiques (polissage - brillance - finition soignée) et fonctionnelles (facilité de manipulation).

La fermeture et l'ouverture de ces boîtiers doivent être aisées et simples en mettant en oeuvre des moyens qui n'affectent pas la forme extérieure du boîtier.

L'invention entend proposer une solution de fabrication simple à la constitution des éléments assurant l'ouverture et la fermeture d'un boîtier.

A cet effet l'invention a pour objet un boîtier en matière plastique notamment pour produits cosmétiques, constitué par un fond et un couvercle articulés entre eux au moyen d'une charnière et comportant à l'opposé de ladite charnière un fermoir constitué d'un ergot solidaire du couvercle et faisant saillie vers l'intérieur du boîtier et d'un ergot solidaire du fond faisant saillie vers l'extérieur du boîtier et susceptible d'être encliqueté élastiquement au-dessus de l'ergot du couvercle.

Selon l'invention l'ergot solidaire dudit fond est en une seule pièce avec une lame élastique constituée par une portion amincie de paroi latérale dudit fond provenant d'une division dans le sens de l'épaisseur de ladite paroi venue directement de moulage, ladite portion étant séparée de l'autre partie de la paroi par un espace permettant sa flexion vers l'intérieur du boîtier, ladite autre partie formant butée de limitation de la déformation en flexion de ladite lame.

De manière préférée ladite lame est pourvue du côté extérieur au boîtier d'une protubérance faisant saillie par rapport à la face extérieure de ladite paroi latérale et formant poussoir d'actionnement manuel du fermoir.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :
- la figure 1 est une vue générale du boîtier selon l'invention ;
- la figure 2 est une coupe selon la ligne A-A de la figure 1 ;
- la figure 3 est une coupe selon la ligne B-B de la figure 1 ;
- la figure 4 est une coupe selon la ligne C-C de la figure 1.

En se reportant à ces figures on voit un boîtier destiné à recevoir des produits cosmétiques du genre fard à paupières ou à joues, dont l'espace intérieur peut être cloisonné, constitué par un couvercle 1 et un fond 2 articulés autour d'une charnière 3. Le couvercle porte sur son bord antérieur un ergot 4 en saillie vers l'intérieur du boîtier tandis que la paroi latérale 2a du fond 2 est pourvue d'un ergot 5 faisant saillie vers l'extérieur du boîtier. Lorsque le couvercle 1 est rabattu sur le fond 2 l'ergot 5 passe au-dessus de l'ergot 4 et constitue un fermoir. La fermeture du boîtier est donc assurée par le maintien de l'ergot 4 par l'ergot 5. Au moment du passage de l'ergot 5 au niveau de l'ergot 4 il se produit une déformation élastique du support de l'ergot 5 comme expliqué ci-après en regard des dispositions propres de l'invention.

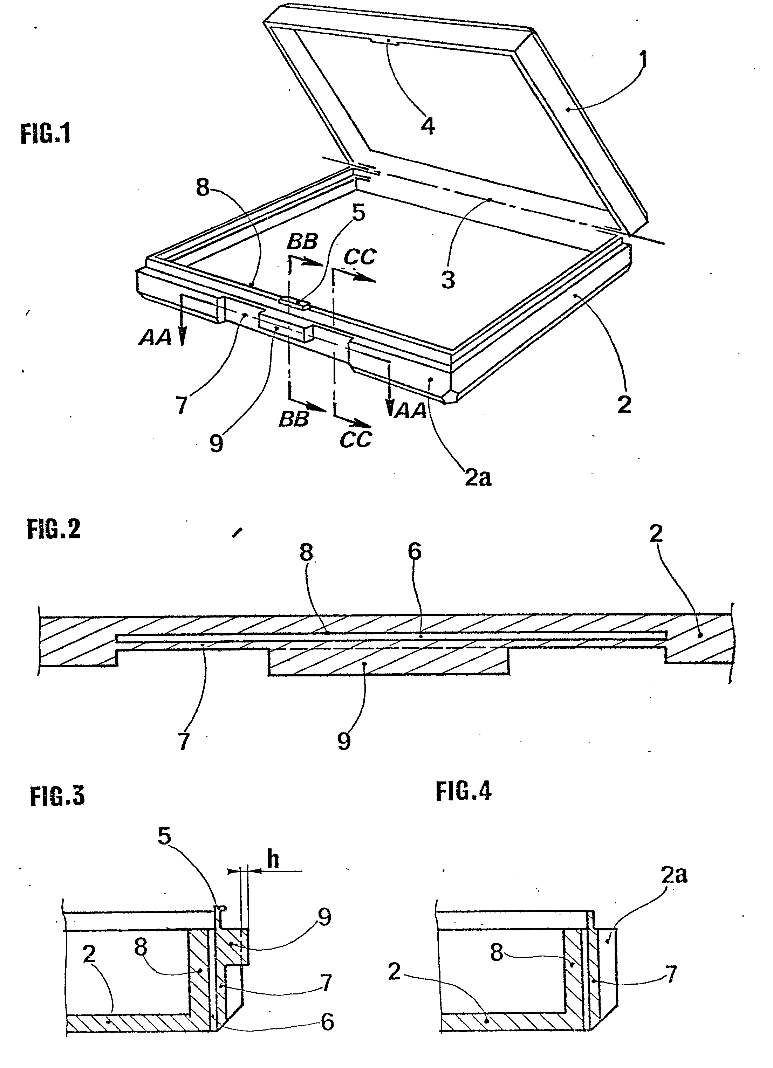

On voit en regard des figures 2 à 4 que la paroi 2a du fond du boîtier opposée à la charnière 3 est divisée dans le sens de son épaisseur et dans sa partie médiane par un espace longitudinal 6, en deux parties, une première partie 7 en forme de lame élastique située du côté extérieur de la paroi, relativement mince par rapport à la paroi 2a et à la seconde partie 8 située du côté intérieur de la paroi 2a . Cette partition est venue directement de moulage. L'ergot 5 est porté par la lame 7 et est en une seule pièce avec elle, elle-même étant en une seule pièce avec le fond 2 du boîtier du fait de sa fabrication par moulage. Sur sa face extérieure la lame 7 porte une protubérance 9 qui fait saillie d'une valeur $h$ par rapport à la face extérieure de la paroi 2a . Cette saillie constitue le poussoir du fermoir du boîtier.

En effet, la lame 7, du fait de sa faible épaisseur d'une part et parce que la matière plastique employée pour la confection de ce boîtier est de caractéristiques mécaniques possédant une certaine raideur d'autre part, se comporte comme une lame de ressort élastique. Ainsi, lors de la fermeture du boîtier, l'ergot 4 repousse vers l'intérieur l'ergot 5 lorsqu'il passe à son niveau. Ce mouvement est autorisé par la flexion élastique vers l'intérieur de la lame 7, qui ramène ensuite l'ergot 5 vers l'extérieur, donc derrière l'ergot 4.

Pour l'ouverture du boîtier, on appuie sur le poussoir 9 en créant une flexion de la lame 7 dégageant ainsi l'ergot 4 de l'ergot 5. Le couvercle peut alors être manoeuvré autour de l'articulation 3. On aura noté que la flexion de la lame 7 est limitée par la partie 8 susdite qui constitue une butée empêchant de dépasser la limite de déformation élastique de ladite lame.

L'invention trouve une application intéressante dans le domaine des boîtiers de produits cosmétiques qui sont produits en très grande série par le fait qù'elle n'implique la mise en oeuvre d'aucun organe supplémentaire à ceux produits par moulage.

Elle n'est pas limitée à la description qui vient d'en être donnée mais couvre au contraire toutes les variantes qui pourraient lui être apportées sans sortir de son cadre ni de son esprit.

## REVENDICATIONS

1. Boîtier en matière plastique, notamment pour produits cosmétiques, constitué par un fond et un couvercle articulés entre eux au moyen d'une charnière et comportant, à l'opposé de ladite charnière, un fermoir constitué d'un ergot solidaire du couvercle et faisant saillie vers l'intérieur du boîtier et d'un ergot solidaire du fond faisant saillie vers l'extérieur du boîtier et susceptible d'être encliqueté élastiquement au-dessus de l'ergot du couvercle, caractérisé en ce que l'ergot solidaire dudit fond est en une seule pièce avec une lame élastique constituée par une portion amincie de paroi latérale dudit fond provenant d'une division dans le sens de l'épaisseur de ladite paroi venue directement de moulage, ladite portion étant du côté intérieur de la paroi et séparée de l'autre partie de la paroi par un espace permettant sa flexion vers l'intérieur du boîtier, ladite autre partie formant butée de limitation de la déformation en flexion de ladite lame.

2. Boîtier selon la revendication 1, caractérisé en ce que ladite lame est pourvue, du côté extérieur au boîtier, d'une protubérance faisant saillie par rapport à la face extérieure de ladite paroi latérale et formant poussoir d'actionnement manuel du fermoir.

0036828

1-1

FIG.1

FIG.2

FIG.3

FIG.4

**Office européen des brevets**

**RAPPORT DE RECHERCHE EUROPEENNE**

EP 81 42 0027

| Catégorie | Citation du document avec indication, en cas de besoin, des parties pertinentes | Revendication concernée |
|---|---|---|
| | US - A - 3 651 983 (HAUGEN)<br>* Colonne 2, lignes 5-61; figures 1-3 * | 1 |
| | -- | |
| | FR - A - 2 243 663 (LACROIX)<br>* En entier * | 1 |
| | -- | |
| | US - A - 2 967 638 (BURMAN)<br>* En entier * | 1 |
| | -- | |
| | US - A - 2 765 094 (RYAN)<br>* En entier * | 1 |
| | -- | |
| | US - A - 3 221 919 (GESSNER)<br>* Figure 3 * | 2 |
| | -- | |
| A | US - A - 1 851 462 (STELLER)<br>* Figures 1-3 * | 1 |
| | ----- | |

## DOCUMENTS CONSIDERES COMME PERTINENTS

**CLASSEMENT DE LA DEMANDE (Int. Cl.³)**

A 45 C 13/10
A 45 D 33/22

**DOMAINES TECHNIQUES RECHERCHES (Int. Cl.³)**

A 45 C
A 45 D
B 65 D
G 03 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-05-1981 | SIGWALT |